# EUROPÄISCHE PATENTSCHRIFT

(11) **EP 3 189 552 B1**
(45) Veröffentlichungstag und Bekanntmachung des Hinweises auf die Patenterteilung: **27.11.2019**
(21) Anmeldenummer: 15747478.4
(22) Anmeldetag: 05.08.2015
(51) Int. Cl.: H01M 2/02

(54) **BATTERIEBEHÄLTER ENTHALTEND EINE MEMBRANARTIGE SEITE UND VERFAHREN ZUR DESSEN HERSTELLUNG**
BATTERY CONTAINER WITH ONE MEMBRANE SIDE AND THE PROCESS FOR ITS PRODUCTION.
RECIPIENT POUR BATTERIE COMPRENANT UNE MEMBRANE ET PROCEDE POUR SA PRODUCTION.

(30) Priorität: 01.09.2014 DE 102014217425
(43) Veröffentlichungstag der Anmeldung: 12.07.2017
(73) Patentinhaber: Robert Bosch GmbH, 70442 Stuttgart (DE)
(72) Erfinder: GERLACH, Martin, 96129 Strullendorf (DE); POLLER, Silvan, 02829 Neisseaue Ot Kaltwasser (DE); REINSHAGEN, Holger, 96052 Bamberg (DE); KAISER, Rudi, 96047 Bamberg (DE)
(86) Internationale Anmeldenummer: PCT/EP2015/068058
(87) Internationale Veröffentlichungsnummer: WO 2016/034356

(56) Entgegenhaltungen:
- EP-A1- 2 273 583
- EP-A2- 1 746 672
- WO-A1-2014/026793
- DE-A1-102012 018 128
- US-A- 3 713 895
- US-A1- 2013 011 701
- US-A1- 2013 089 765

## Beschreibung

### Stand der Technik

Es ist absehbar, dass sowohl bei stationären Anwendungen, zum Beispiel bei Windkraftanlagen, als auch bei mobilen Anwendungen, zum Beispiel bei Elektrokraftfahrzeugen (electric vehicles, EV) oder Hybridfahrzeugen (hybrid electric vehicles, HEV), als wiederaufladbare elektrische Energiespeicher (EES) vermehrt neue Batteriesysteme (Akkumulatorsysteme), zum Beispiel mit Lithium-Ionen-Akkumulatoren, Lithium-Polymer-Akkumulatoren oder Nickel-Metallhybrid-Akkumulatoren, zum Einsatz kommen werden.

Ein Batteriesystem umfasst eine Vielzahl von Batteriezellen beispielsweise zylindrische oder prismatische Batteriezellen. Aufgrund ihres Zelleninnenwiderstands und der stattfindenden elektrochemischen Prozesse erwärmen sich die Batteriezellen während des Ladens und Entladens. Die Batteriezellen können in Reihe (Serie) verschaltet werden, um die elektrische Spannung zu erhöhen, und / oder parallel verschaltet werden, um den maximalen elektrischen Strom zu erhöhen. Dabei können die Batteriezellen zu Batteriemodulen bzw. Batterieeinheiten zusammengefasst werden. Beim Einsatz zum Antrieb von Fahrzeugen können beispielsweise ca. 100 Batteriezellen (als eine Traktionsbatterie) in Serie bzw. parallel verschaltet werden.

Eine Lithium-Ionen-Batteriezelle umfasst eine positive Elektrode (Kathode) und eine negative Elektrode (Anode), die Lithium-Ionen (Li+) beim Laden reversibel einlagern (Interkalation) oder beim Entladen wieder auslagern (Deinterkalation) können. Dadurch ergibt sich beim Laden / Entladen eine periodische Volumenänderung der Elektroden, die im Bereich von ca. 10 % bis ca. 30 % liegen kann. Die Volumenänderung der Elektroden bewirkt in den Elektroden und den Batteriezellen mechanische Arbeit, die eine schnellere Alterung der Batteriezellen bewirkt und somit die Lebensdauer der Batteriezellen verkürzt. Außerdem "quellen" die Elektroden über die Lebenszeit der Batteriezellen, wodurch eine fortlaufende Volumenvergrößerung der Elektroden und der Batteriezellen über die Lebenszeit bewirkt wird. Während zylindrische Batteriezellen (Rundzellen) aufgrund ihrer Wickelgeometrie quasi stabil sind, sollten prismatische Batteriezellen und Pouchzellen durch eine Kraft von außen stabilisiert werden, die der Volumenvergrößerung entgegenwirkt. Die Kraft kann beispielsweise durch Verspannen der Batteriezellen in einem Packrahmen eines Batteriemodul bewirkt werden.

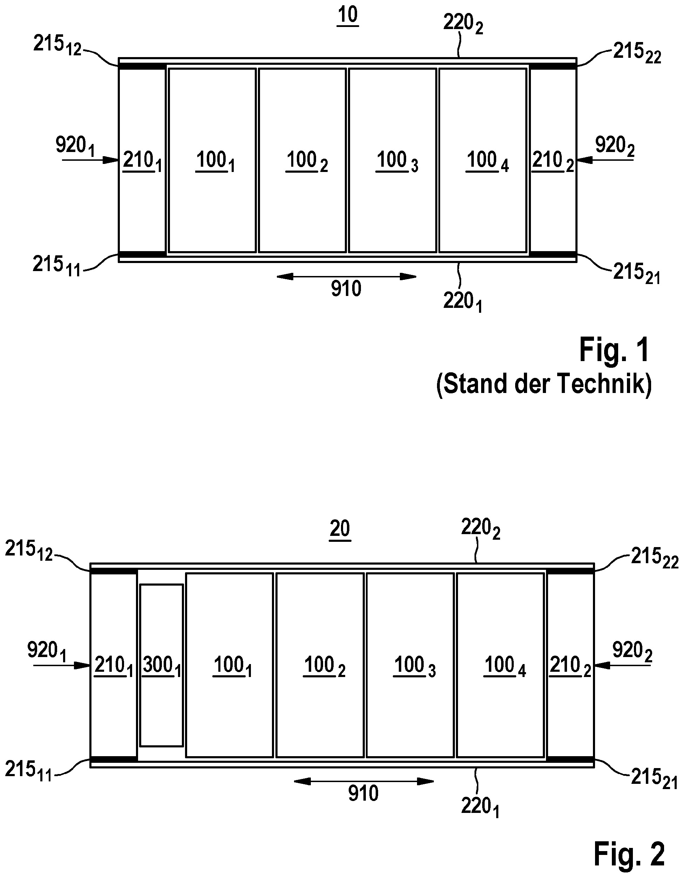

Figur 1 zeigt eine schematische Draufsicht eines Batteriemoduls 10 gemäß des Standes der Technik.

Das Batteriemodul 10 umfasst eine Vielzahl von prismatischen Batteriezellen 100₁ ... 100₄, die nebeneinander angeordnet sind, und einen Packrahmen, der eine erste Endplatte 210₁, eine zweite Endplatte 210₂, ein erstes Spannband 220₁ und ein zweites Spannband 220₂ umfasst und die Vielzahl von prismatischen Batteriezellen 100₁ ... 100₄ umschließt und verspannt. Die Herstellung des Batteriemoduls 10 kann beispielsweise ein Anordnen der Vielzahl von Batteriezellen 100₁ ... 100₄ zwischen der ersten Endplatte 210₁ und der zweiten Endplatte 210₂, ein Aufbringen einer externen Kraft auf die Endplatten 210₁, 210₂ zum Fügen der Vielzahl von Batteriezellen 100₁ ... 100₄ und ein Befestigen der Spannbänder 220₁, 220₂ an den Endplatten 210₁, 210₂ beispielsweise mittels einer Vielzahl von Schweißverbindungen 215₁₁ ... 215₂₂ zum Erhalt der Kraft 920₁, 920₂, die der Kraft der Vielzahl der gefügten Batteriezellen 100₁ ... 100₄ entgegenwirkt, umfassen.

Die am Anmeldetag der vorliegenden Erfindung noch nicht veröffentlichte Druckschrift DE 10 2014 204 245 offenbart eine Energiespeichereinheit mit einer Mehrzahl von galvanischen Zellen, wobei die Zellen jeweils in ein Zellengehäuse integrierte Außenkontakte umfassen (Nussschalen-Zellen, nutshell-cells) und die Endplatten integrierte Kontaktplatten oder Leiterplatten umfassen.

Die Druckschrift DE 10 2012 018 128 A1 offenbart eine Einzelzelle für eine Batterie, umfassend ein Zellgehäuse, in welchem eine Elektrodenfolienanordnung und zumindest ein elastisches Element angeordnet sind, wobei durch das zumindest eine elastische Element die Elektrodenfolienanordnung gegen zumindest eine Gehäusewand des Zellgehäuses gepresst ist. Das elastische Element ist dabei mit einem Fluid befüllt, wodurch die Elektrodenfolien gegen das Zellgehäuse gepresst werden.

Um die Funktionalität und Lebensdauer von Batterien (Akkumulatoren) und Batteriesystemen (Akkumulatorsystemen) weiter zu erhöhen und ihre Herstellung weiter zu vereinfachen, ist es jedoch erforderlich, eine verbesserte Spannvorrichtung für Batteriezellen bereitzustellen.

### Offenbarung der Erfindung

Die erfindungsgemäßen Vorrichtungen und Verfahren mit den Merkmalen der unabhängigen Ansprüche haben den Vorteil, dass das Verspannen der Batteriezellen vereinfacht werden kann. Dadurch kann auf aufwändige mechanische Elemente, Konstruktionen und / oder Verfahrensschritte verzichtet werden. Somit können die Komponentenzahl reduziert und damit die Zuverlässigkeit erhöht werden. Weiterhin können Volumen und / oder Gewicht des Batteriemoduls bzw. der Batterie reduziert werden. Außerdem kann der Aufbau des Batteriemoduls bzw. Modulträgers freier gestaltet, also beispielsweise vereinfacht und / oder höher integriert, werden. Außerdem kann die Kraft zur Verspannung der Batteriezellen einfach, direkt und flexibel eingestellt werden kann. Weiterhin kann die Kraft elastisch eingestellt werden. Somit kann die fortlaufende Quellung der Elektroden kompensiert werden. Dadurch kann eine Erhöhung der Kraft über die Lebenszeit der Batteriezellen vermieden werden. Somit können Leistungsverluste und Sicherheitsrisiken der Batteriezellen, die durch eine Erhöhung der Kraft verursacht werden können, verhindert oder zumindest vermindert werden.

Vorteilhafte Ausführungsformen der vorliegenden Erfindung sind in den abhängigen Ansprüchen beschrieben.

Zweckmäßiger Weise kann das Behältnis eine Membran oder flexible Membran umfassen. Dadurch kann eine Relativbewegung zweier Körper ineinander an einer Kontaktfläche vermieden werden. Somit kann der Aufbau des Behältnisses vereinfacht werden. Weiterhin kann Leckage an der Kontaktfläche vermieden werden. Außerdem kann das Gewicht des Behältnisses reduziert werden.

Zweckmäßiger Weise kann die Membran blasenartig, tütenartig, kissenartig oder trommelartig ausgebildet sein. Dadurch kann der Aufbau des Behältnisses weiter vereinfacht werden.

Zweckmäßiger Weise kann die Membran elastisch oder dehnbar ausgebildet sein. Dadurch kann die Membran als Energiespeicher bzw. Druckspeicher eingesetzt werden.

Zweckmäßiger Weise kann die Membran Folie, Kunststofffolie, metallisierte Folie oder Metallfolie oder Gewebe umfassen. Dadurch kann die Herstellung des Behältnisses vereinfacht werden.

Zweckmäßiger Weise kann die Membran elektrisch leitfähig ausgebildet sein. Dadurch kann, insbesondere bei Nussschalen-Zellen, ein elektrischer Anschluss der Batteriezelle oder Vielzahl von Batteriezellen bereitgestellt werden.

Zweckmäßiger Weise kann die Membran elektrisch leitfähiges Material, Aluminium (AI), Kupfer (Cu) oder Kohlenstoff (C) umfassen. Dadurch kann der Aufbau der Membran vereinfacht werden.

Zweckmäßiger Weise kann die Membran elektrisch nichtleitfähig ausgebildet sein. Dadurch kann die Gefahr eines elektrischen Kurzschlusses reduziert werden.

Zweckmäßiger Weise kann das Behältnis einen Körper zum Tragen der Membran umfassen. Dadurch kann ein Totvolumen bereitgestellt werden. Somit kann die Federkonstante des Behältnisses beeinflusst werden. Weiterhin kann das Behältnis weitere Funktionalitäten bereitstellen.

Zweckmäßiger Weise kann der Körper Metall wie Aluminium oder Kunststoff umfassen. Dadurch kann eine Kompatibilität des Materials mit den Materialien des Batteriemoduls verbessert werden. Somit kann die Gefahr von Korrosion reduziert werden.

Zweckmäßiger Weise kann der Körper als Endplatte ausgebildet sein. Dadurch kann die Komponentenzahl reduziert werden.

Zweckmäßiger Weise kann das Behältnis einen Verschluss oder ein Ventil wie Sicherheitsventil oder Überdruckventil umfassen. Dadurch können die Reparatur, Wartung und / oder Instandsetzung vereinfacht werden. Weiterhin kann die Sicherheit erhöht werden.

Zweckmäßiger Weise kann das Behältnis eine Naht wie Klebnaht oder Schweißnaht umfassen. Dadurch kann die Herstellung des Behältnisses vereinfacht werden.

Zweckmäßiger Weise kann das Behältnis das Fluid umfassen. Dadurch kann die Herstellung des Batteriemoduls vereinfacht werden.

Zweckmäßiger Weise kann das Fluid Flüssigkeit wie Wasser (H₂O) oder Silikonöl, Gas wie Inertgas beispielsweise Stickstoff (N₂) oder Edelgas beispielsweise Argon (Ar) oder Krypton (Kr), Gel oder komprimierbares Gel umfassen. Dadurch kann das Fluid an die Erfordernisse der jeweiligen Spannvorrichtung angepasst werden. Dabei kann das Behältnis mehrere Fluide umfassen.

Zweckmäßiger Weise kann das Fluid komprimierbar sein. Dadurch kann das Fluid als Energiespeicher bzw. Druckspeicher eingesetzt werden. Alternativ kann das Fluid nichtkomprimierbar sein.

Die Erfindung stellt weiterhin ein Batteriemodul bereit, das die zuvor beschriebene Spannvorrichtung umfasst.

Die Erfindung stellt weiterhin eine Batterie bereit, die die zuvor beschriebene Spannvorrichtung oder das zuvor beschriebene Batteriemodul umfasst.

Die Erfindung stellt weiterhin ein Batteriesystem bereit, das die zuvor beschriebene Spannvorrichtung, das zuvor beschriebene Batteriemodul oder die zuvor beschriebene Batterie umfasst.

Die Erfindung stellt weiterhin ein Fahrzeug, insbesondere Kraftfahrzeug wie Elektrokraftfahrzeug, Hybridfahrzeug oder Elektromotorrad (Elektro-Bike, E-Bike), Elektrofahrrad (Pedal Electric Cycle, Pedelec), ein Seefahrzeug wie Elektroboot oder Unterseeboot (U-Boot), ein Luftfahrzeug oder ein Raumfahrzeug, bereit, das die zuvor beschriebene und mit dem Fahrzeug verbundene Spannvorrichtung, das zuvor beschriebene und mit dem Fahrzeug verbundene Batteriemodul, die zuvor beschriebene und mit dem Fahrzeug verbundene Batterie oder das zuvor beschriebene und mit dem Fahrzeug verbundene Batteriesystem umfasst.

Zweckmäßiger Weise kann das Spannen der Spannvorrichtung ein Befüllen des Raums mit dem Fluid und / oder ein Verschließen des Behältnisses umfassen. Dadurch kann das Befüllen an die Erfordernisse bei der Herstellung des Batteriemoduls angepasst werden.

Zweckmäßiger Weise kann das Verfahren weiterhin ein Befüllen des Raums mit dem Fluid, ein Verschließen des Behältnisses, und ein Abkühlen oder Verflüssigen des Fluids umfassen, wobei das Spannen der Spannvorrichtung ein Erwärmen oder Erwärmen lassen des Fluids in dem Behältnis umfasst. Dadurch kann das Behältnis der der Herstellung des Batteriemoduls verschlossen werden. Somit kann die Herstellung vereinfacht werden.

Zweckmäßiger Weise kann das Verfahren weiterhin ein Überprüfen eines Drucks des Fluids in dem Behältnis und / oder ein Einstellen des Drucks umfassen. Dadurch kann der Druck des Fluids beispielsweise im Rahmen einer Reparatur, Wartung und / oder Instandsetzung, korrigiert werden. Weiterhin kann der Druck des Fluids beispielsweise im Rahmen des Betriebs angepasst werden.

Somit können Gewicht und / oder Kosten beispielsweise Herstellungskosten wie Materialkosten und Verarbeitungskosten wie Montagekosten, reduziert werden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigefügten Zeichnungen ersichtlich.
Figur 1 zeigt eine schematische Draufsicht eines Batteriemoduls 10 gemäß des Standes der Technik,
Figur 2 zeigt eine schematische Draufsicht eines Batteriemoduls 20 mit einer Spannvorrichtung 300₁ gemäß einer Ausführungsform der Erfindung,
Figur 3 zeigt eine schematische Draufsicht eines Batteriemoduls 30 mit einer Spannvorrichtung 300₁ gemäß einer anderen Ausführungsform der Erfindung,
Figur 4 zeigt eine schematische Draufsicht eines Batteriemoduls 40 mit einer Spannvorrichtung 300₁ gemäß einer weiteren Ausführungsform der Erfindung,
Figur 5 zeigt eine schematische Draufsicht eines anderen Batteriemoduls 50 mit einer Spannvorrichtung 300₁ gemäß einer weiteren Ausführungsform der Erfindung,
Figur 6 zeigt eine schematische Draufsicht eines Batteriemoduls 60 mit zwei Spannvorrichtungen 300₁, 300₂ gemäß einer weiteren Ausführungsform der Erfindung,
Figuren 7-15 zeigen schematische Ansichten im Seitenschnitt von Spannvorrichtungen 300 gemäß Ausführungsformen der Erfindung,
Figuren 16-18 zeigen schematische Ansichten im Längsschnitt von Spannvorrichtungen 300 gemäß anderer Ausführungsformen der Erfindung,
Figur 19 zeigt eine schematische Schnittansicht eines Spannsystems 70 gemäß einer anderen Ausführungsform der Erfindung, und
Figur 20 zeigt eine schematische Schnittansicht eines modifizierten Spannsystems 80 gemäß dieser Ausführungsform der Erfindung.

Figur 2 zeigt eine schematische Draufsicht eines Batteriemoduls 20 mit einer Spannvorrichtung 300₁ gemäß einer Ausführungsform der Erfindung.

Das Batteriemodul 20 umfasst eine Vielzahl von prismatischen Batteriezellen 100₁ ... 100₄, die nebeneinander angeordnet sind, und eine Packvorrichtung beispielsweise einen Packrahmen, der eine erste Endplatte 210₁, eine zweite Endplatte 210₂, ein erstes Spannband 220₁ und ein zweites Spannband 220₂ umfasst und die Vielzahl von prismatischen Batteriezellen 100₁ ... 100₄ umschließt. Die Batteriezellen 100₁ ... 100₄ können beispielsweise als Nussschalen-Zellen ausgebildet sein. Die Spannbänder 220₁, 220₂ können beispielsweise mittels einer Vielzahl von Klebeverbindungen, Nietverbindungen, Schweißverbindungen 215₁₁ ... 215₂₂ wie Schweißpunkten oder Schweißnähten, oder Schraubverbindungen an den Endplatten 210₁, 210₂ befestigt sein.

Das Batteriemodul 20 umfasst weiterhin eine Spannvorrichtung 300₁ zum Spannen der Vielzahl von Batteriezellen 100₁ ... 100₄. Die Spannvorrichtung 300₁ kann, wie in Figur 1 beispielhaft gezeigt, zwischen der ersten Endplatte 210₁ und einer dazu benachbarten Batteriezelle 100₁ der Vielzahl von Batteriezellen 100₁ ... 100₄ angeordnet sein. Die Spannvorrichtung 300₁ kann sich ggf. in einem entspannten beispielsweise gefalteten Zustand befinden. Die Spannvorrichtung 300₁ kann sich in einem gespannten beispielsweise entfalteten Zustand befinden, sodass sie die Vielzahl von Batteriezellen 100₁ ... 100₄ verspannen kann. Die Spannvorrichtung 300 kann als Expander-Spannvorrichtung (Expander) ausgebildet sein. Die Spannvorrichtung 300₁ bzw. der Expander kann ein flexibles Behältnis, das einen Innenraum (Hohlraum) mit variablen Volumen umschließt, umfassen. Das Behältnis kann eine Membran wie flexible Membran umfassen bzw. als Membran ausgebildet sein. Die Membran kann beispielsweise blasenartig, tütenartig, kissenartig oder trommelartig ausgebildet sein. Die Membran kann elastisch bzw. dehnbar ausgebildet sein. Das Behältnis bzw. die Membran kann beispielsweise Folien wie Kunststofffolien, metallisierte Folien oder Metallfolien, oder Gewebe umfassen. Das Behältnis bzw. die Membran kann elektrisch leitfähig ausgebildet sein, sodass die Spannvorrichtung 300₁ eine elektrische Verbindung herstellen kann. Dazu kann das Behältnis bzw. die Membran beispielsweise mit einem elektrisch leitfähigen Material wie Aluminium, Kupfer oder Kohlenstoff beschichtet sein. Alternativ kann das Behältnis bzw. die Membran elektrisch nichtleitfähig ausgebildet sein. Die Spannvorrichtung 300₁ kann weiterhin einen Körper, der die Membran trägt, umfassen. Der Körper kann beispielsweise Metall wie Aluminium oder Kunststoff umfassen. Eine Folie kann mit einer anderen Folie oder dem Körper beispielsweise durch Kleben beispielsweise mittels eines flüssigen Klebstoffes oder eines Klebebands, oder Schweißen wie Laserschweißen, Reibschweißen, Ultraschallschweißen verbunden werden. Das Behältnis kann zylinderartig ausgebildet sein. Im gespannten Zustand umfasst die Spannvorrichtung 300₁ bzw. das Behältnis, in seinem Innenraum, ein Füllmedium. Das Füllmedium kann ein Fluid beispielsweise eine Flüssigkeit wie Wasser oder Silikonöl, ein Gas oder Inertgas wie Stickstoff oder Edelgas wie Argon oder Krypton, oder ein Gel wie komprimierbares Gel umfassen. Wenn das Füllmedium ein Gas ist, kann vorzugsweise ein Gas mit einem niedrigen Diffusionskoeffizienten verwendet werden, um ein Entweichen des Gases (Leckage) beispielsweise durch die Membran zu verhindern oder zu verlangsamen. Das Füllmedium kann komprimierbar oder nichtkomprimierbar sein. Wenn das Füllmedium komprimierbar ist, zum Beispiel, wenn ein Gas als Füllmedium verwendet wird, kann das komprimierte Füllmedium die Kraft zum Verspannen der Vielzahl von Batteriezellen 100₁ ... 100₄ aufbringen. Wenn das Füllmedium nichtkomprimierbar ist, zum Beispiel, wenn eine Flüssigkeit als Füllmedium verwendet wird, kann die Kraft zum Verspannen der Vielzahl von Batteriezellen 100₁ ... 100₄ durch eine dehnbare Membran aufgebracht werden. Weiterhin kann die Spannvorrichtung 300₁ bzw. das Behältnis ein nichtkomprimierbares Medium wie Wasser und ein komprimierbares Medium wie Luft umfassen. Die Spannvorrichtung 300₁ bzw. das Behältnis kann einen Verschluss umfassen. Somit kann die Spannvorrichtung 300₁ bzw. das Behältnis nach dem Befüllen mit dem Füllmedium verschlossen bzw. versiegelt werden. Alternativ kann die Spannvorrichtung 300₁ bzw. das Behältnis ein Ventil wie Sicherheitsventil oder Überdruckventil umfassen. Somit kann der Druck des Füllmediums beispielsweise im Rahmen einer Reparatur, Wartung und / oder Instandsetzung, überprüft und / oder eingestellt werden. Wenn beispielsweise ein Teil des Füllmediums entwichen ist, kann ein tatsächlicher Istdruck wieder auf einen Solldruck erhöht werden, oder wenn sich das Volumen der Vielzahl von Batteriezellen 100₁ ... 100₄ durch Quellung der Elektroden vergrößert hat, kann der Istdruck wieder auf den Solldruck reduziert werden. In ähnlicher Weise kann der Istdruck während des Betriebs der Vielzahl von Batteriezellen 100₁ ... 100₄ überwacht und dynamisch gesteuert werden. So kann der Istdruck beim Laden, wenn sich das Volumen der Vielzahl von Batteriezellen 100₁ ... 100₄ verringert, erhöht werden, und beim Entladen, wenn sich das Volumen der Vielzahl von Batteriezellen 100₁ ... 100₄ vergrößert, reduziert werden.

Die Herstellung des Batteriemoduls 20 kann ein Anordnen bzw. Positionieren der Spannvorrichtung 300₁ und der Vielzahl von Batteriezellen 100₁ ... 100₄ in der Packvorrichtung, d. h. zwischen der ersten Endplatte 210₁ und der zweiten Endplatte 210₂, und ein Spannen bzw. Entfalten der Spannvorrichtung 300₁ zum Spannen der Vielzahl von Batteriezellen 100₁ ... 100₄ umfassen. Dabei kann das Spannen bzw. Entfalten beispielsweise durch Befüllen der Spannvorrichtung 300₁ mit dem Füllmedium über einen Anschluss bzw. eine Anschlussöffnung erfolgen. Bei einem Gas als Füllmedium kann der Fülldruck beispielsweise 10 bar betragen. Der Anschluss kann nach dem Befüllen dauerhaft verschlossen bzw. versiegelt beispielsweise verklebt oder verschweißt werden. Alternativ kann der Anschluss einen Verschluss oder ein Ventil wie Sicherheitsventil oder Überdruckventil, die nach dem Befüllen in dem Anschluss verbleiben, umfassen. Alternativ kann das Entfalten beispielsweise gemäß der thermischen Zustandsgleichung durch (Wieder-) Erwärmen einer bereits mit einem Gas befüllten und dann, zum Beispiel in flüssigen Stickstoff, tiefgekühlten Spannvorrichtung 300₁ auf Umgebungstemperatur erfolgen.

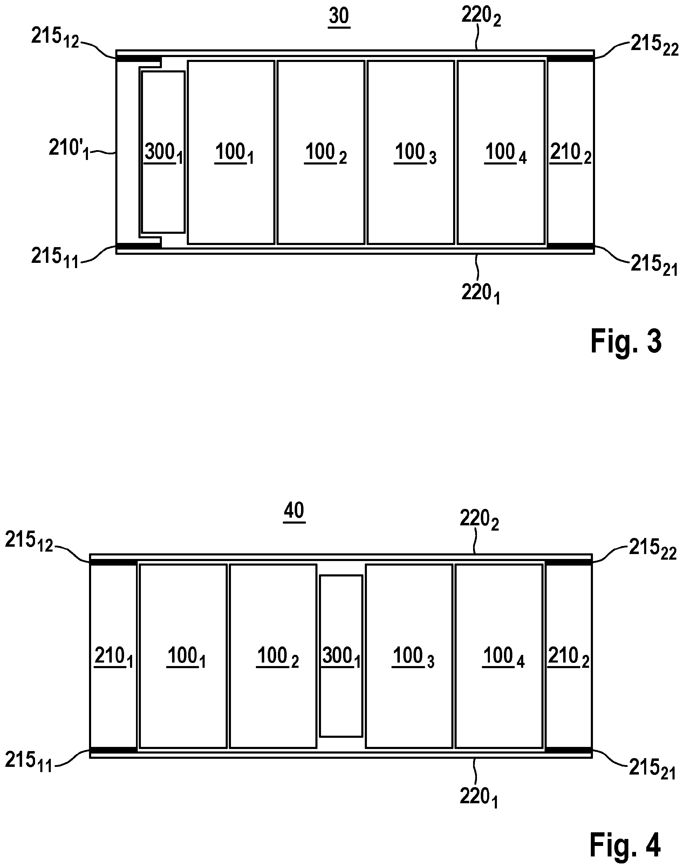

Figur 3 zeigt eine schematische Draufsicht eines Batteriemoduls 30 mit einer Spannvorrichtung 300₁ gemäß einer anderen Ausführungsform der Erfindung.

Das Batteriemodul 30 ähnelt dem mit Bezug auf Figur 2 beschriebenen Batteriemodul 20, wobei die Spannvorrichtung 300₁ in erste Endplatte 210₁ integriert ist. Allgemein kann die Spannvorrichtung 300₁ in eine Einrichtung der Packvorrichtung integriert sein.

Figur 4 zeigt eine schematische Draufsicht eines Batteriemoduls 40 mit einer Spannvorrichtung 300₁ gemäß einer weiteren Ausführungsform der Erfindung.

Das Batteriemodul 40 entspricht im Wesentlichen dem mit Bezug auf Figur 2 beschriebenen Batteriemodul 20. Bei dem Batteriemodul 40 ist die Spannvorrichtung 300₁, wie in Figur 4 beispielhaft gezeigt, zwischen zwei Batteriezellen 100₂, 100₃ der Vielzahl von Batteriezellen 100₁ ... 100₄ angeordnet, sodass die Spannvorrichtung 300₁ im Wesentlichen mittig im Batteriemodul 40 angeordnet ist. Somit kann Spannvorrichtung 300₁ symmetrisch auf die Vielzahl von Batteriezellen wirken. Weiterhin liegt der Schwerpunkt des Batteriemoduls 40 im Wesentlichen mittig im Batteriemodul 40. Allgemein kann die Spannvorrichtung 300₁ zwischen zwei zueinander benachbarten Batteriezellen beispielsweise Batteriezellen 100₁, 100₂ oder Batteriezellen 100₃, 100₄ der Vielzahl von Batteriezellen 100₁ ... 100₄ angeordnet sein.

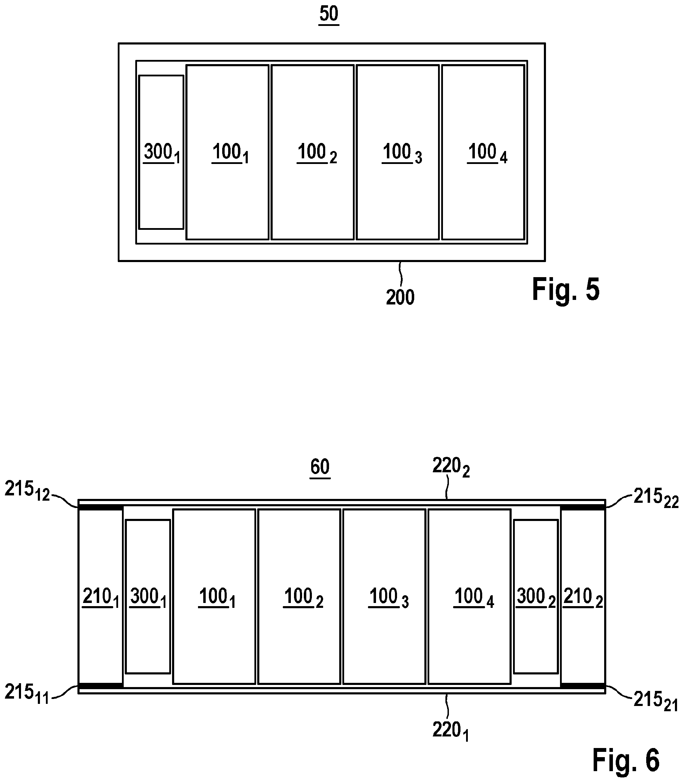

Figur 5 zeigt eine schematische Draufsicht eines anderen Batteriemoduls 50 mit einer Spannvorrichtung 300₁ gemäß einer weiteren Ausführungsform der Erfindung.

Das Batteriemodul 50 ähnelt dem mit Bezug auf Figur 2 beschriebenen Batteriemodul 20, wobei die Packvorrichtung als Gehäuse 200 beispielsweise einstückige und / oder wannenartige Gehäuseschale ausgebildet ist.

Figur 6 zeigt eine schematische Draufsicht eines Batteriemoduls 60 mit zwei Spannvorrichtungen 300₁, 300₂ gemäß einer weiteren Ausführungsform der Erfindung.

Das Batteriemodul 60 entspricht im Wesentlichen dem mit Bezug auf Figur 2 beschriebenen Batteriemodul 20. Das Batteriemodul 60 umfasst weiterhin eine zweite Spannvorrichtung 300₂, die, wie in Figur 6 beispielhaft gezeigt, zwischen der zweiten Endplatte 210₂ und einer dazu benachbarten Batteriezelle 100₄ der Vielzahl von Batteriezellen 100₁ ... 100₄ angeordnet sein kann.

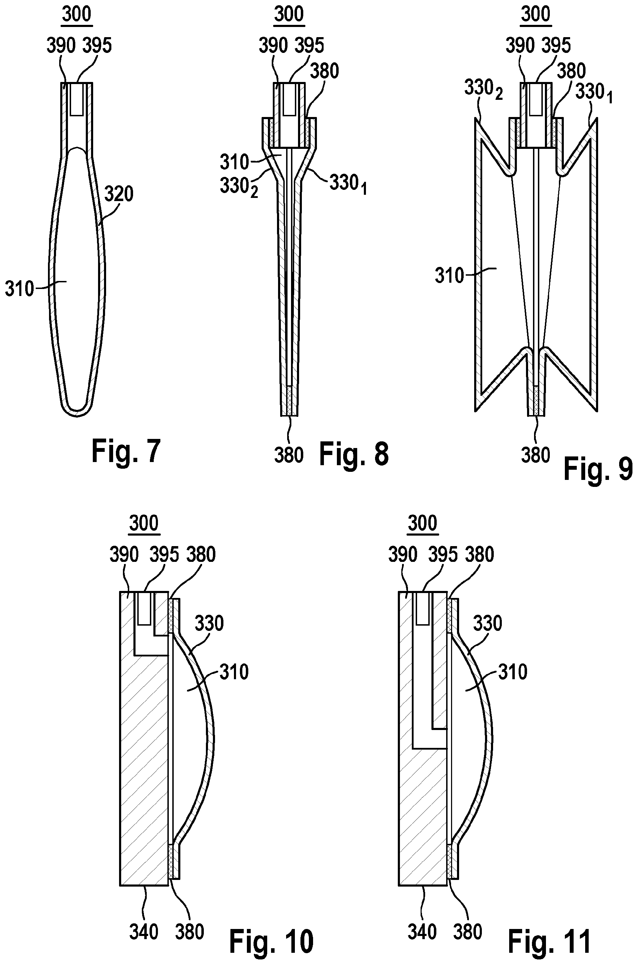

Figuren 7-15 zeigen schematische Ansichten im Seitenschnitt von Spannvorrichtungen 300 gemäß Ausführungsformen der Erfindung.

Die Spannvorrichtung 300 gemäß Figur 7 umfasst ein blasenartiges Behältnis 320 mit einem befüllbaren Innenraum 310. Das Behältnis 320 umfasst einen Anschluss 390, der mit einem Verschluss bzw. Ventil 395 verschlossen ist. Der Anschluss 390 kann, wie in Figur 7 gezeigt, an einem Randbereich des Behältnisses angeordnet sein. Das blasenartige Behältnis 320 kann, wie in Figur 7 gezeigt, einstückig ausgebildet sein. Das blasenartige Behältnis 320 kann beispielsweise rechteckig wie quadratisch oder rund ausgebildet sein.

Die Spannvorrichtung 300 gemäß Figur 8 umfasst ein kissenartige Behältnis, das eine erste Folie 330₁, eine zweite Folie 330₂ und einen Anschluss 390 umfasst, die mittels Nähten 380 wie Klebnähten oder Schweißnähten miteinander verbunden sind, sodass ein Innenraum 310 gebildet ist. Der Anschluss 390 ist mit einem Verschluss bzw. Ventil 395 verschlossen. Das kissenartige Behältnis 320 kann beispielsweise rechteckig wie quadratisch oder rund ausgebildet sein.

Die Spannvorrichtung 300 gemäß Figur 9 umfasst ein tütenartiges Behältnis, das eine erste Folie 330₁, eine zweite Folie 330₂ und einen Anschluss 390 umfasst, die mittels Nähten 380 wie Klebnähten oder Schweißnähten miteinander verbunden sind, sodass ein Innenraum 310 gebildet ist. Die erste Folie 330₁ und die zweite Folie 330₂ können Falze umfassen, sodass das Behältnis faltenbalgartig oder ziehharmonikaartig ausgebildet sein kann. Der Anschluss 390 ist mit einem Verschluss bzw. Ventil 395 verschlossen. Das tütenartige Behältnis kann beispielsweise rechteckig wie quadratisch oder rund ausgebildet sein.

Die Spannvorrichtung 300 gemäß Figur 10 umfasst ein Behältnis, das einen Körper (Tragelement, Träger) 340 und eine Folie 330 umfasst, die mittels Nähten 380 wie Klebnähten oder Schweißnähten miteinander verbunden sind, sodass ein Innenraum 310 gebildet ist. Der Körper 340 ist formstabil und trägt die Folie 330. Der Körper 340 kann beispielsweise als Endplatte, Gehäuse, Rahmenelement, Tragrahmen oder Sturzrahmen (crash fame) ausgebildet sein. Der Anschluss 390 ist in einem Randbereich des Körpers 340 ausgebildet und mit einem Verschluss bzw. Ventil 395 verschlossen. Der Anschluss 390 ist in demselben Randbereich mit dem Innenraum 310 fluidleitend verbunden, sodass ein zusätzlicher Innenraum mit konstantem Volumen (Totvolumen oder Totraum) im Körper 340 im Verhältnis zum Innenraum 310 mit variablem Volumen, und somit seine Wirkung bei Druckänderung, vergleichsweise klein ist. Somit bestimmt das Verhältnis des Volumens des Innenraums 310 zu dem Volumen des zusätzlichen Innenraums eine Federkonstante der Spannvorrichtung 300. Das Behältnis kann beispielsweise rechteckig wie quadratisch oder rund ausgebildet sein.

Die Spannvorrichtung 300 gemäß Figur 11 entspricht im Wesentlichen der in Figur 10 gezeigten Spannvorrichtung 300. Der Anschluss 390 ist in einem Zentralbereich mit dem Innenraum 310 mit variablem Volumen fluidleitend verbunden, sodass der zusätzliche Innenraum mit konstantem Volumen im Körper 340 im Verhältnis zum Innenraum 310 mit variablem Volumen, und somit seine Wirkung bei Druckänderung, im Vergleich zur in Figur 10 gezeigten Spannvorrichtung 300 größer ist.

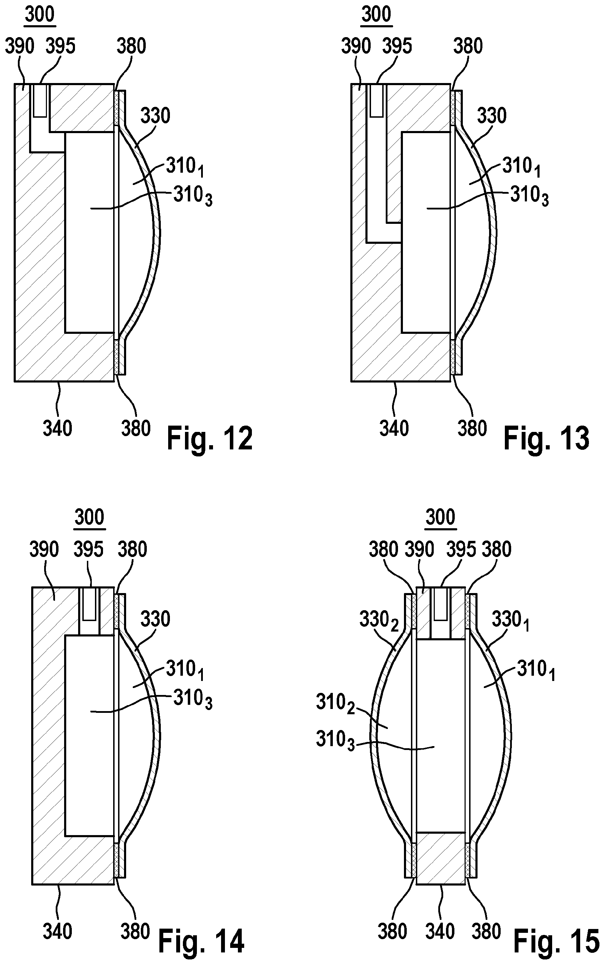

Die Spannvorrichtung 300 gemäß Figur 12 entspricht im Wesentlichen der in Figur 10 gezeigten Spannvorrichtung 300. Der Körper 340 umfasst einen weiteren zusätzlichen Innenraum 310₃ mit konstantem Volumen, der im Randbereich mit dem Anschluss 390 und dem Innenraum 310₁ fluidleitend verbunden ist, sodass der zusätzliche Innenraum mit konstantem Volumen im Körper 340 im Verhältnis zum Innenraum 310₁ mit variab-Iem Volumen, und somit seine Wirkung bei Druckänderung, im Vergleich zur in Figur 10 gezeigten Spannvorrichtung 300 wesentlich größer ist. Durch Wahl eines großen Totvolumens kann der Druckabfall bei Entweichen des Gases erreicht werden.

Die Spannvorrichtung 300 gemäß Figur 13 entspricht im Wesentlichen einer Kombination der in Figur 10 gezeigten Spannvorrichtung 300 und der in Figur 12 gezeigten Spannvorrichtung 300. Der Körper 340 umfasst den weiteren zusätzlichen Innenraum 310₃ mit konstantem Volumen, und der Anschluss 390 ist in dem Zentralbereich mit dem zusätzlichen Innenraum 310₃ fluidleitend verbunden, sodass der zusätzliche Innenraum mit konstantem Volumen im Körper 340 im Verhältnis zum Innenraum 310₁ mit variablem Volumen, und somit seine Wirkung bei Druckänderung, im Vergleich zur in Figur 10 gezeigten Spannvorrichtung 300 noch größer ist.

Die Spannvorrichtung 300 gemäß Figur 14 entspricht im Wesentlichen der in Figur 12 gezeigten Spannvorrichtung 300. Der Anschluss 390 ist an einer Mantelfläche des weiteren zusätzlichen Innenraums 310₃ mit dem weiteren zusätzlichen Innenraum 310₃ fluidleitend verbunden ist, sodass die Spannvorrichtung 300 im Vergleich zu der in Figur 12 gezeigten Spannvorrichtung 300 kompakter ausgebildet sein kann.

Die Spannvorrichtung 300 gemäß Figur 15 ähnelt der in Figur 14 gezeigten Spannvorrichtung 300. Die Spannvorrichtung 300 gemäß Figur 14 umfasst ein Behältnis, das einen Körper 340, eine erste Folie 330₁ und eine zweite Folie 330₂ umfasst, die einander gegenüberliegend angeordnet sind und / oder mittels Nähten 380 wie Klebnähten oder Schweißnähten mit dem Körper 340 verbunden sind, sodass ein erster Innenraum 310₁ mit einem ersten variablen Volumen, ein zweiter Innenraum 310₂ mit einem variablen Volumen und ein dritter Innenraum 310₃ mit konstantem Volumen, die miteinander fluidleitend verbunden sind, gebildet sind. Der Körper 340 kann als "kommunizierende Röhre" aufgefasst werden. Während die erste Folie 330₁ zum Verspannen einer ersten Batteriezelle oder Vielzahl von Batteriezellen 100₃, 100₄ dient, kann die zweite Folie 330₂ beispielsweise, wie mit Bezug auf Figur 4 beschrieben, zum Verspannen einer zweiten Batteriezelle oder Vielzahl von Batteriezellen 100₁, 100₂ dienen. Alternativ kann die zweite Folie 330₂ als Ausgleichselement dienen. Dabei bestimmt das Verhältnis des Volumens des ersten Innenraums 310₁ zu dem Gesamtvolumen des zweiten Innenraums 330₂ und dritten Innenraums 330₃ die Federkonstante dieser Spannvorrichtung 300.

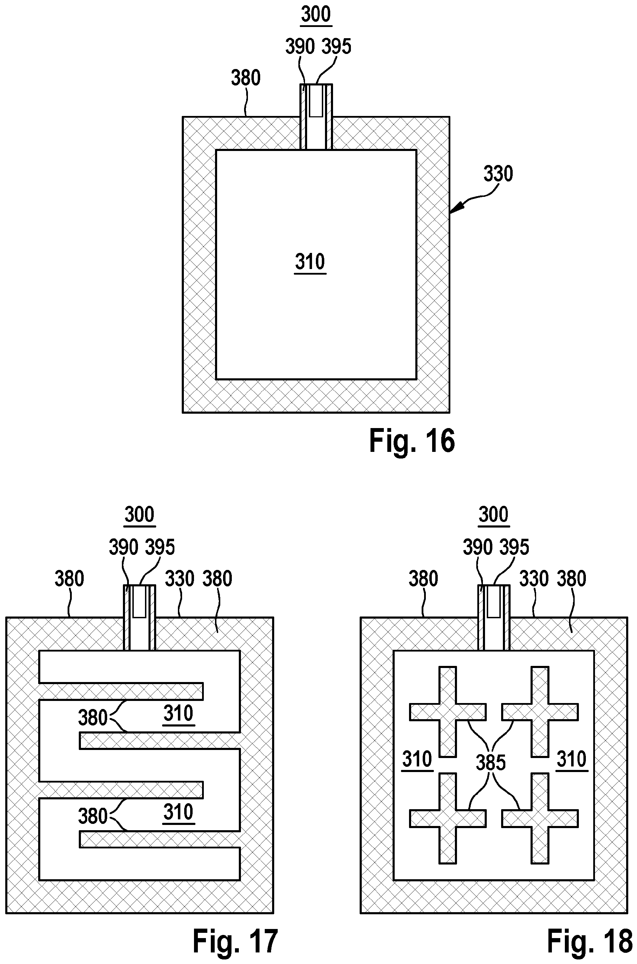

Figuren 16-18 zeigen schematische Ansichten im Längsschnitt von Spannvorrichtungen 300 gemäß anderer Ausführungsformen der Erfindung.

Die Spannvorrichtung 300 gemäß Figur 16 entspricht im Wesentlichen der in Figur 8 gezeigten Spannvorrichtung 300, umfassend das kissenartige Behältnis. Die Folien 330 und der Anschluss 390 sind in einem Randbereich mittels Nähten 380 wie Klebnähten oder Schweißnähten miteinander verbunden, sodass der Innenraum 310 ausgebildet ist.

Die Spannvorrichtung 300 gemäß Figur 17 entspricht im Wesentlichen der in Figur 16 gezeigten Spannvorrichtung 300. Die Spannvorrichtung 300 umfasst weiterhin eine Vielzahl von linearen Nähten 385 wie Klebnähten oder Schweißnähten, die die Folien 330 miteinander verbinden und derart in dem Innenraum 310 ausgebildet sind, dass der Innenraum 310 in eine Vielzahl von Kammern, die miteinander fluidleitend verbunden sind, strukturiert bzw. unterteilt wird.

Die Spannvorrichtung 300 gemäß Figur 18 entspricht im Wesentlichen der in Figur 17 gezeigten Spannvorrichtung 300. Die Spannvorrichtung 300 umfasst weiterhin eine Vielzahl von kreuzförmigen Nähten 385 wie Klebnähten oder Schweißnähten, die die Folien 330 miteinander verbinden und derart in dem Innenraum 310 ausgebildet sind, dass der Innenraum 310 in eine Vielzahl von Kammern, die miteinander fluidleitend verbunden sind, strukturiert bzw. unterteilt wird.

Alternativ kann eine Spannvorrichtung eine Vielzahl von Innenräumen oder eine Vielzahl von Kammern, die nicht fluidleitend verbunden sind, aufweisen.

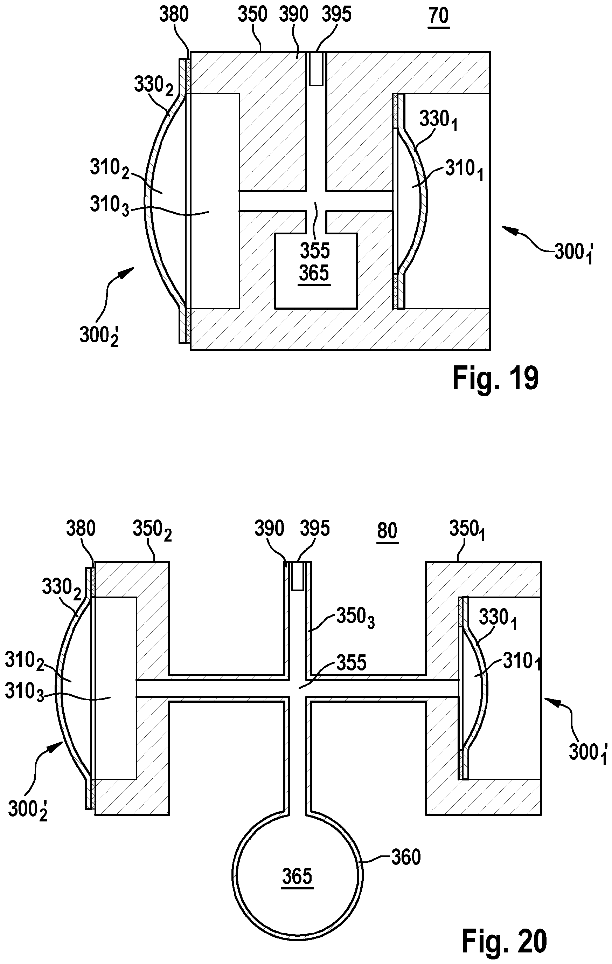

Figur 19 zeigt eine schematische Schnittansicht eines Spannsystems 70 gemäß einer anderen Ausführungsform der Erfindung.

Das Spannsystem 70 umfasst ein Spannelement 300₂' mit einem Totvolumen 310₃, das der mit Bezug auf Figur 13 beschriebenen Spannvorrichtung 300 ähnelt, ein Element 300₁', das der mit Bezug auf Figur 11 beschriebenen Spannvorrichtung 300 ähnelt, eine Kammer 365 zur Aufnahme eines Fluidvolumens und Verbindungskanäle 355, die das Spannelement 300₂', das Element 300₁', den Anschluss 390 und die Kammer 365 miteinander fluidleitend verbinden. Der Folie 330₁ des Elements 300₁' kann, wie in Figur 19 gezeigt, versenkt angeordnet sein. Das Element 300₁' kann als Spannelement zum Verspannen von Batteriezellen oder als Expansionselement zum Speichern eines variablen Fluidvolumens ohne Änderung der Außenmaße dienen. Das Spannsystem 70 kann eine Flüssigkeit als Arbeitsmedium und, in der Kammer 365, ein Gas als Druckspeichermedium umfassen.

Das System 70 kann eine Vielzahl von Spannelementen umfassen und / oder beispielsweise in einem Sturzrahmen installiert sein.

Figur 20 zeigt eine schematische Schnittansicht eines modifizierten Spannsystems 80 gemäß dieser Ausführungsform der Erfindung.

Das modifizierte Spannsystem 80 entspricht im Wesentlichen dem mit Bezug auf Figur 19 beschriebenen Spannsystem 70. Im Unterschied zum Spannsystem 70 umfasst das modifizierte Spannsystem 80 separate Tragelemente 350₁, 350₂, ein separates Speicherelement 360, in dem die Kammer 365 ausgebildet ist, und / oder separate kommunizierende Verbindungselemente (Rohre, Schläuche) 350₃, sodass eine freie, ggf. räumlich getrennte Anordnung der Elemente ermöglicht wird.

Abschließend wird angemerkt, dass Ausdrücke wie "umfassend" und "aufweisend" oder dergleichen nicht ausschließen, dass weitere Elemente oder Schritte vorgesehen sein können. Die verwendeten Anzahlen sind lediglich beispielhaft, sodass eine Vielzahl zwei, vier, fünf, sechs, oder mehr Elemente oder Schritte umfassen kann. Weiterhin wird darauf hingewiesen, dass "ein" oder "eine" keine Vielzahl ausschließen. Weiterhin wird angemerkt, dass Zahlwörter bzw. Ordnungszahlen wie "erste", "zweite" usw. ausschließlich zur Unterscheidung von Elementen und Schritten dienen, ohne dabei eine Reihenfolge der Anordnung der Elemente oder der Ausführung der Schritte festzulegen bzw. zu beschränken. Außerdem können die in Verbindung mit den verschiedenen Ausführungsformen beschriebenen Merkmale beliebig miteinander kombiniert werden. Schließlich wird angemerkt, dass die Bezugszeichen in den Ansprüchen nicht als den Schutzbereich der Ansprüche beschränkend ausgelegt werden sollen.

## Patentansprüche

1. Batteriemodul (20; 30; 40; 50; 60) mit einer Vielzahl von prismatischen Batteriezellen (100₁ ... 100₄) und einer Packvorrichtung, die Vielzahl an Batteriezellen (100₁ ... 100₄) umschließt, ausgebildet als Packrahmen umfassend eine erste Endplatte (210₁), eine zweite Endplatte (210₂), ein erstes Spannband (201₁) und zweites Spannband (210₂) oder umfassend ein Gehäuse (200) **gekennzeichnet durch** eine
- Spannvorrichtung (300) ausgebildet zu einem Spannen der Vielzahl von Batteriezellen (100₁ ... 100₄), welche zwischen zwei Batteriezellen (100₂, 100₃) der Vielzahl von Batteriezellen (100₁ ... 100₄), zwischen einer Batteriezelle (100₁) und der ersten Endplatte (210₁) oder zwischen einer Batteriezelle (100₁) und dem Gehäuse (200) angeordnet ist, umfassend:
- ein Behältnis, das einen Raum (310) mit einem variablen Volumen umfasst, ausgebildet zur Aufnahme eines Fluids,
wobei:
- das Behältnis weiterhin derart ausgebildet ist, dass eine Batteriezelle (100) oder eine Vielzahl von Batteriezellen (100₁ ... 100₄) verspannt werden kann, wobei zu einem Verspannen der Raum des Behältnisses mit einem Fluid befüllt und verschlossen werden kann.

2. Batteriemodul (20; 30; 40; 50; 60) nach Anspruch 1, wobei:
- das Behältnis eine Membran (320) oder flexible Membran umfasst,
- die Membran (320) blasenartig, tütenartig, kissenartig oder trommelartig ausgebildet ist,
- die Membran (320) elastisch oder dehnbar ausgebildet ist,
- die Membran (320) Folie (330), Kunststofffolie, metallisierte Folie oder Metallfolie oder Gewebe umfasst,
- die Membran (320) elektrisch leitfähig ausgebildet ist,
- die Membran elektrisch leitfähiges Material, Aluminium, Kupfer oder Kohlenstoff umfasst, oder
- die Membran (320) elektrisch nichtleitfähig ausgebildet ist.

3. Batteriemodul (20; 30; 40; 50; 60) nach Anspruch 2, wobei:
- das Behältnis einen Körper (340) zum Tragen der Membran (320) umfasst,
- der Körper (340) Metall, Aluminium oder Kunststoff umfasst,
- der Körper (340) als Endplatte (210') ausgebildet ist,
- das Behältnis einen Verschluss (395), ein Ventil, ein Sicherheitsventil oder ein Überdruckventil umfasst, oder
- das Behältnis eine Naht, Klebnaht oder Schweißnaht umfasst.

4. Batteriemodul (20; 30; 40; 50; 60) nach einem der Ansprüche 1 bis 3, wobei:
- das Behältnis das Fluid umfasst,
- das Fluid eine Flüssigkeit wie Wasser (H2O) oder Silikonöl umfasst oder
- das Fluid Gas wie Inertgas beispielsweise Stickstoff (N2) oder Edelgas beispielsweise Argon (Ar) oder Krypton (Kr), Gel oder komprimierbares Gel umfasst oder
- das Fluid komprimierbar ist.

5. Batterie, umfassend:
- ein Batteriemodul (20; 30; 40; 50; 60) nach einem der Ansprüche 1 bis 4.

6. Batteriesystem, umfassend:
- das Batteriemodul (20; 30; 40; 50; 60) nach einem der Ansprüche 1 bis 4, oder
- die Batterie nach Anspruch 5.

7. Fahrzeug, umfassend:
- das Batteriemodul (20; 30; 40; 50; 60) nach einem der Ansprüche 1 bis 4 verbunden mit dem Fahrzeug,
- die Batterie nach Anspruch 5 verbunden mit dem Fahrzeug, oder
- das Batteriesystem nach Anspruch 6 verbunden mit dem Fahrzeug.

8. Verfahren zur Herstellung eines Batteriemoduls (20; 30; 40; 50; 60), **gekennzeichnet durch**:
- Bereitstellen einer Vielzahl von prismatischen Batteriezellen (100₁ ... 100₄),
- Bereitstellen einer Packvorrichtung, die die Vielzahl an Batteriezellen (100₁ ... 100₄) umschließt, ausgebildet als Packrahmen umfassend eine erste Endplatte (210₁), eine zweite Endplatte (210₂), ein erstes Spannband (201₁) und zweites Spannband (210₂) oder umfassend ein Gehäuse (200)
- Bereitstellen einer Spannvorrichtung (300) umfassend ein Behältnis, das einem Raum (310) mit einem variablen Volumen umfasst, ausgebildet zur Aufnahme eines Fluids, wobei das Behältnis weiterhin derart ausgebildet wird, dass eine Batteriezelle (100) oder eine Vielzahl von Batteriezellen (100) verspannt werden kann,
- Anordnen der Spannvorrichtung (300) der Vielzahl von Batteriezellen (100) in dem Batteriemodul (20; 30; 40; 50; 60), wobei die Spannvorrichtung (300) zwischen zwei Batteriezellen (100₂, 100₃) der Vielzahl von Batteriezellen (100₁ ... 100₄), zwischen einer Batteriezelle (100₁) und der ersten Endplatte (210₁) oder zwischen einer Batteriezelle (100₁) und dem Gehäuse (200) angeordnet wird, und
- Spannen der Spannvorrichtung (300) zum Verspannen der Batteriezelle (100) der Vielzahl von Batteriezellen (100) durch.
- Befüllen des Raums (310) mit dem Fluid und
- Verschließen des Behältnisses.

9. Das Verfahren nach Anspruch 8, weiterhin umfassend:
- Abkühlen oder Verflüssigen des Fluids,
wobei:
- das Spannen der Spannvorrichtung (300) umfasst:
- Erwärmen oder Erwärmen lassen des Fluids in dem Behältnis.

10. Das Verfahren nach einem der Ansprüche 8 bis 9, weiterhin umfassend:
- Überprüfen eines Drucks des Fluids in dem Behältnis, oder
- Einstellen des Drucks.

## Claims

1. Battery module (20; 30; 40; 50; 60) having a multiplicity of prismatic battery cells (100₁ ... 100₄) and a packaging device, which surrounds the multiplicity of battery cells (100₁ ... 100₄), formed as a pack frame comprising a first end plate (210₁), a second end plate (210₂), a first clamping band (201₁) and second clamping band (210₂) or comprising a housing (200), **characterized by**
- a clamping device (300) designed for clamping the multiplicity of battery cells (100₁ ... 100₄), which is arranged between two battery cells (100₂, 100₃) of the multiplicity of battery cells (100₁ ... 100₄), between a battery cell (100₁) and the first end plate (210₁) or between a battery cell (100₁) and the housing (200), comprising:
- a receptacle that comprises a space (310) having a variable volume designed for receiving a fluid,
wherein:
- the receptacle is furthermore embodied in such a manner that a battery cell (100) or a multiplicity of battery cells (100₁ ... 100₄) can be clamped, wherein the space of the receptacle can be filled with a fluid and closed for the purpose of clamping.

2. Battery module (20; 30; 40; 50; 60) according to Claim 1, wherein:
- the receptacle comprises a membrane (320) or a flexible membrane,
- the membrane (320) is embodied in a balloon-type, bag-type, cushion-type or drum-type manner,
- the membrane (320) is embodied in an elastic or flexible manner,
- the membrane (320) comprises a film (330), a synthetic material film, a metallized film or a metal film or fabric,
- the membrane (320) is embodied in an electrically conductive manner,
- the membrane comprises electrically conductive material, aluminium, copper or carbon, or
- the membrane (320) is embodied in an electrically nonconductive manner.

3. Battery module (20; 30; 40; 50; 60) according to Claim 2, wherein:
- the receptacle comprises an element (340) for carrying the membrane (320),
- the element (340) comprises metal, aluminium or synthetic material,
- the element (340) is embodied as an end plate (210'),
- the receptacle comprises a closure (395), a valve, a safety valve or an excess pressure valve, or
- the receptacle comprises a seam, adhesive seam or weld seam.

4. Battery module (20; 30; 40; 50; 60) according to one of Claims 1 to 3, wherein:
- the receptacle contains the fluid,
- the fluid comprises a liquid such as water (H2O) or silicone oil or
- the fluid comprises gas such as inert gas, for example nitrogen (N2), or noble gas, for example argon (Ar) or krypton (Kr), gel or compressible gel or
- the fluid is compressible.

5. Battery, comprising:
- a battery module (20; 30; 40; 50; 60) according to one of Claims 1 to 4.

6. Battery system, comprising:
- the battery module (20; 30; 40; 50; 60) according to one of Claims 1 to 4, or
- the battery according to Claim 5.

7. Vehicle, comprising:
- the battery module (20; 30; 40; 50; 60) according to one of Claims 1 to 4 connected to the vehicle,
- the battery according to Claim 5 connected to the vehicle, or
- the battery system according to Claim 6 connected to the vehicle.

8. Method for producing a battery module (20; 30; 40; 50; 60), **characterized by**:
- providing a multiplicity of prismatic battery cells (100₁ ... 100₄),
- providing a packaging device, which surrounds the multiplicity of battery cells (100₁ ... 100₄), formed as a pack frame comprising a first end plate (210₁), a second end plate (210₂), a first clamping band (201₁) and second clamping band (210₂) or comprising a housing (200),
- providing a clamping device (300) comprising a receptacle that comprises a space (310) having a variable volume designed for receiving a fluid, wherein the receptacle is furthermore embodied in such a manner that a battery cell (100) or a multiplicity of battery cells (100) can be clamped,
- arranging the clamping device (300) of the multiplicity of battery cells (100) in the battery module (20; 30; 40; 50; 60), wherein the clamping device (300) is arranged between two battery cells (100₂, 100₃) of the multiplicity of battery cells (100₁ ... 100₄), between a battery cell (100₁) and the first end plate (210₁) or between a battery cell (100₁) and the housing (200), and
- clamping the clamping device (300) for clamping the battery cell (100) of the multiplicity of battery cells (100) by
- filling the space (310) with the fluid and
- closing the receptacle.

9. Method according to Claim 8, furthermore comprising:
- cooling or liquefying the fluid,
wherein:
- the procedure of clamping of the clamping device (300) includes:
- warming the fluid in the receptacle or allowing the re-warming of the fluid in the receptacle.

10. Method according to one of Claims 8 to 9, furthermore comprising:
- checking a pressure of the fluid in the receptacle, or
- adjusting the pressure.

## Revendications

1. Module de batterie (20 ; 30 ; 40 ; 50 ; 60) comprenant une pluralité d'éléments de batterie prismatiques (100₁ ... 100₄) et un dispositif d'empilement entourant la pluralité d'éléments de batterie (100₁... 100₄), réalisé sous la forme d'un châssis d'empilement comprenant une première plaque d'extrémité (210₁), une deuxième plaque d'extrémité (210₂), une première bande de serrage (201₁) et une deuxième bande de serrage (210₂) ou comprenant un boîtier (200), **caractérisé par**
- un dispositif de serrage (300) conçu pour serrer la pluralité d'éléments de batterie (100₁ ... 100₄), qui est disposé entre deux éléments de batterie (100₂, 100₃) de la pluralité d'éléments de batterie (100₁... 100₄), entre un élément de batterie (100₁) et la première plaque d'extrémité (210₁) ou entre un élément de batterie (100₁) et le boîtier (200) :
- un contenant comprenant un espace à volume variable (310) conçu pour contenir un fluide,
dans lequel :
- le contenant est en outre réalisé de manière à ce qu'un élément de batterie (100) ou une pluralité d'éléments de batterie (100₁... 100₄) puisse être serré, dans lequel l'espace du contenant peut être rempli d'un fluide et fermé pour effectuer un serrage.

2. Module de batterie (20 ; 30 ; 40 ; 50 ; 60) selon la revendication 1, dans lequel :
- le contenant comprend une membrane (320) ou membrane flexible,
- la membrane (320) est réalisée sous forme de bulle, de sac, de coussin ou de tambour,
- la membrane (320) est réalisée de manière élastique ou extensible,
- la membrane (320) comprend un film (330), un film plastique, un film métallisé ou une feuille de métal ou un tissu,
- la membrane (320) est conductrice de l'électricité,
- la membrane comprend un matériau électriquement conducteur, de l'aluminium, du cuivre ou du carbone, ou
- la membrane (320) est électriquement non conductrice.

3. Module de batterie (20 ; 30 ; 40 ; 50 ; 60) selon la revendication 2, dans lequel :
- le contenant comprend un corps (340) destiné à supporter la membrane (320),
- le corps (340) comprend un métal, de l'aluminium ou une matière plastique,
- le corps (340) est réalisé sous la forme d'une plaque d'extrémité (210'),
- le contenant comprend un bouchon (395), une soupape, une soupape de sécurité ou une soupape de surpression, ou
- le contenant comprend une couture, un cordon d'adhésif ou un cordon de soudure.

4. Module de batterie (20 ; 30 ; 40 ; 50 ; 60) selon l'une des revendications 1 à 3, dans lequel :
- le contenant comprend le fluide,
- le fluide comprend un liquide tel que de l'eau (H2O) ou de l'huile de silicone, ou
- le fluide comprend un gaz tel qu'un gaz inerte comme par exemple l'azote (N2) ou qu'un gaz noble comme par exemple l'argon (Ar) ou le krypton (Kr), un gel ou un gel compressible, ou
- le fluide est compressible.

5. Batterie, comprenant :
- un module de batterie (20 ; 30 ; 40 ; 50 ; 60) selon l'une des revendications 1 à 4.

6. Système de batterie, comprenant :
- le module de batterie (20 ; 30 ; 40 ; 50 ; 60) selon l'une des revendications 1 à 4, ou
- la batterie selon la revendication 5.

7. Véhicule, comprenant :
- le module de batterie (20 ; 30 ; 40 ; 50 ; 60) selon l'une des revendications 1 à 4, connecté au véhicule,
- la batterie selon la revendication 5 connectée au véhicule, ou
- le système de batterie selon la revendication 6 connecté au véhicule.

8. Procédé de fabrication d'un module de batterie (20 ; 30 ; 40 ; 50 ; 60), **caractérisé par** :
- la fourniture d'une pluralité d'éléments de batterie prismatiques (100₁ .... 100₄),
- la fourniture d'un dispositif d'empilement entourant la pluralité d'éléments de batterie (100₁ ... 100₄), réalisé sous la forme d'un châssis d'empilement comprenant une première plaque d'extrémité (210₁), une deuxième plaque d'extrémité (210₂), une première bande de serrage (201₁) et une deuxième bande de serrage (210₂) ou comprenant un boîtier (200),
- la fourniture d'un dispositif de serrage (300) comprenant un contenant comprenant un espace à volume variable (310) conçu pour contenir un fluide, dans lequel le contenant est en outre réalisé de manière à ce qu'un élément de batterie (100) ou une pluralité d'éléments de batterie (100) puisse être serré,
- l'agencement du dispositif de serrage (300) de la pluralité d'éléments de batterie (100) dans le module de batterie (20 ; 30 ; 40 ; 50 ; 60), dans lequel le dispositif de serrage (300) est agencé entre deux éléments de batterie (100₂, 100₃) de la pluralité d'éléments de batterie (100₁... 100₄), entre un élément de batterie (100₁) et la première plaque d'extrémité (210₁) ou entre un élément de batterie (100₁) et le boîtier (200), et
- la serrage du dispositif de serrage (300) pour serrer la cellule de batterie (100) de la pluralité d'éléments de batterie (100) par
- le remplissage de l'espace (310) avec le fluide et
- la fermeture du contenant.

9. Procédé selon la revendication 8, comprenant en outre :
- le refroidissement ou la liquéfaction du fluide,
dans lequel :
- la serrage du dispositif de serrage (300) comprend :
- le chauffage ou la fait d'amener le fluide à chauffer dans le contenant.

10. Procédé selon l'une des revendications 8 à 9, comprenant en outre :
- le contrôle de la pression du fluide dans le contenant, ou
- le réglage de la pression.
